# NEW EUROPEAN PATENT SPECIFICATION

(11) **EP 0 484 287 B2**
(45) Date of publication and mention of the opposition decision: **08.12.1999**
(45) Mention of the grant of the patent: 08.01.1997
(21) Application number: 91830448.6
(22) Date of filing: 22.10.1991
(51) Int. Cl.: H01R 39/38, H02K 19/36

(54) **A supply and control unit for an alternator for motor vehicles**
Speise- und Steuereinheit für einen Wechselstromgenerator eines Fahrzeugs
Bloc d'alimentation et de contrôle d'un alternateur pour véhicules automobiles

(30) Priority: 30.10.1990 IT 5334690 U
(43) Date of publication of application: 06.05.1992
(73) Proprietor: MAGNETI MARELLI S.p.A., 20145 Milano (IT)
(72) Inventor: Lopez Navarro, Jean, I-10132 Torino (IT)
(74) Representative: Quinterno, Giuseppe

(56) References cited:
- DE-A- 3 012 636
- DE-A- 3 805 060
- FR-A- 2 562 008
- FR-B- 2 486 323
- "Techniques de l'Ingénieur", pages E 1004-5 to E1004-8 (1973) and E1011-6 to E1011-7 (1976)
- Brochure VALEO "REGULATEUR INTEGRE", 6/1990 VALEO EEM

## Description

The present invention relates to a supply and control unit for an alternator for motor vehicles of the kind defined in the preamble of claim 1.

FR-A-2 486 323 discloses a supply and control unit of this kind in which the voltage regulator circuit is separately preassembled in a metal casing which houses the various components thereof embedded in an insulating material. The metal casing has a main outer surface provided with heat-dissipating fins, and side walls provided with projecting appendages for connection to conductors carried by an insulating support structure which also forms the brush-holder body.

DE-A-30 12 636 discloses a supply and control unit in which the voltage regulator is carried by a structure comprising a support plate formed on the brush-holder and two separate adaptor members fitted into peripheral apertures of that support plate. The pins of the voltage regulator extend through apertures defined between the mating contact edges of the support plate and the adaptor members associated therewith. Said pins are welded to contact members of the brush-holder.

DE-A-38 05 060 discloses a supply unit for a d.c. electric motor including a brush-holder of insulating material in which two movable conductive brushes are mounted for cooperation with the collector blades of the rotor cf the motor. The brush-holder body is integral with an insulating support which carries connection conductors in the form of punched/bent metal tracks.

The object of the present invention is to provide a new and improved supply and control unit of the aforementioned type.

This object is achieved according to the invention by a supply and control unit having the features defined in claim 1.

Further characteristics and advantages of the invention will become clear from the detailed description which follows with reference to the appended drawings, provided purely by way of non-limiting example, in which:
Figure 1 is a perspective view of an alternator supply and control unit according to the invention,
Figure 2 shows the electrical layout of an alternator and an associated supply and control unit,
Figure 3 is a partial section taken on the line III-III of Figure 1, and
Figure 4 is a partially-sectioned view of a variant of the portion of the supply and control unit shown in Figure 3, on an enlarged scale.

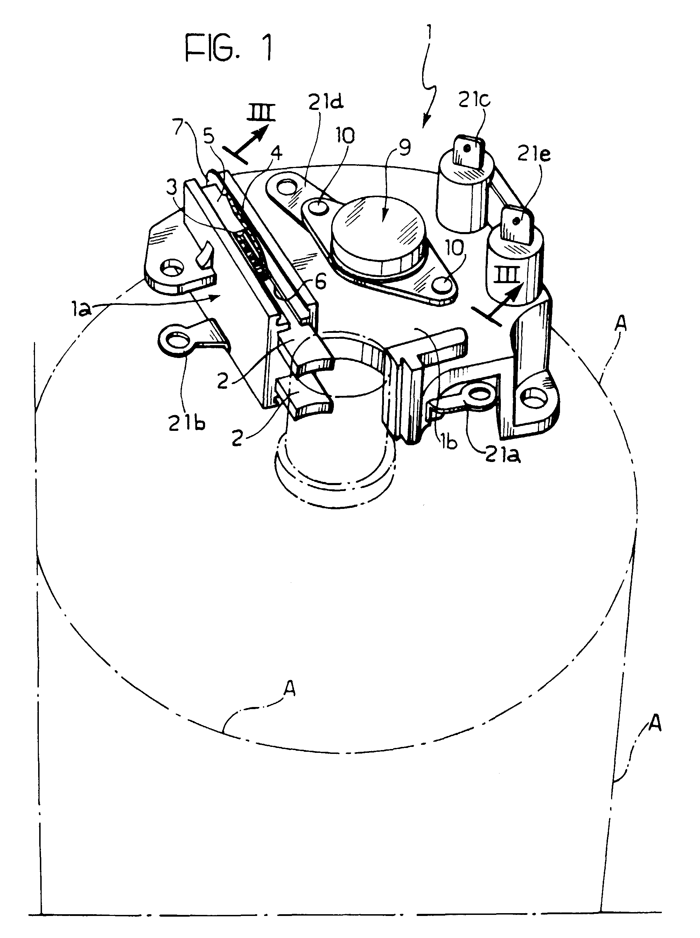

With reference to the drawings, a supply and control unit for an alternator according to the invention includes a one-piece structure 1 of electrically-insulating material moulded from synthetic resin. As can be seen in Figure 1, the structure 1 includes a first, generally parallelepipedal portion la with two parallel chambers each housing a conductive brush 2 which is movable and is acted upon axially by a respective spring 3.

A respective conductive braid 4 is connected to each brush 2 and extends in a channel-shaped groove 5 in the top of the portion la of the structure 1, passing through a slot in part of the base wall of the groove.

Each braid is connected to a respective terminal 7 of conductive material carried by the portion 1a of the insulating support structure 1.

The one-piece support structure 1 also includes a second portion, indicated 1b, which extends in the manner of a plate from a major side surface of the portion la in a plane substantially perpendicular to the plane of the portion 1a.

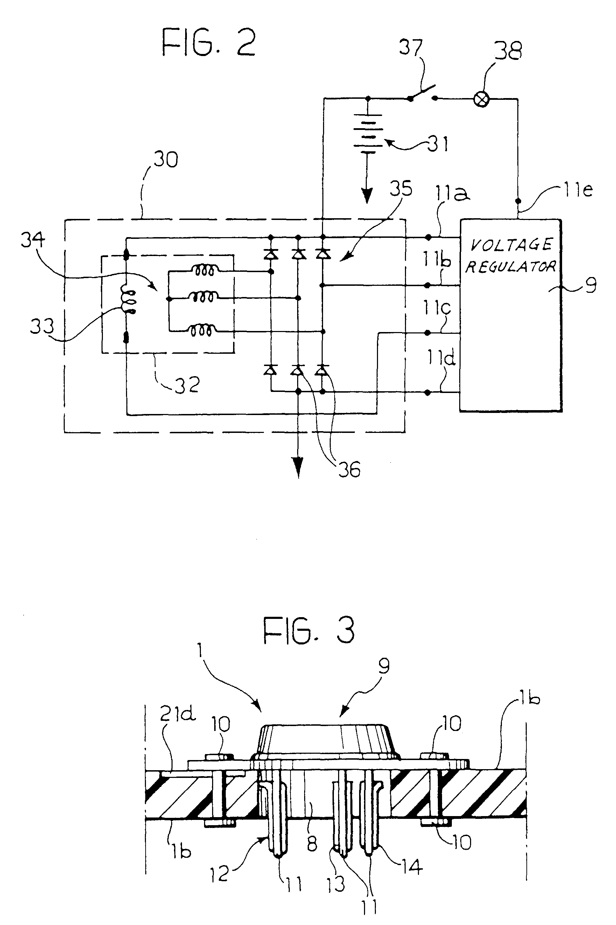

As can be seen in Figure 3, the central region of the portion 1b of the support structure has a hole, indicated 8, in which an integrated voltage-regulator circuit, generally indicated 9, is fixed. In the embodiment shown in Figures 1 and 3, the voltage-regulator circuit is encapsulated in a standard T03 container with two flanges by which it is fixed to the portion 1b of the insulating structure 1 by two metal rivets, indicated 10.

In the embodiment of Figures 1 and 3, the integrated regulator circuit 9 has a plurality of terminals or pins (some of which are indicated 11 in Figure 3) which extend into the hole 8 in the support structure 1. These terminals or pins are intended to be connected to the alternator and to an indicator lamp, substantially according to the layout shown in Figure 2. In this drawing, a generator for recharging the battery 31 of a motor vehicle is generally indicated 30. The generator includes an alternator 32 with a field winding 33 and a three-phase armature winding 34 which, in the embodiment illustrated in Figure 2, is of the star type. The three-phase winding is connected to a full-wave rectifier-bridge circuit, generally indicated 35, formed with semiconductor diodes 36.

The rectifier bridge 35 is connected between the earth and the positive terminal of the battery 31.

As can be seen in the diagram of Figure 2, in the condition of use, the voltage regulator 9 has a terminal lla connected to the output of the rectifier bridge 35, a terminal 11b connected to one phase of the three-phase winding 34, a terminal 11c connected to the field winding 35, a terminal 11d connected to earth, and a terminal lle connected to an indicator lamp 38.

A manually-operated control switch 37 is interposed between the lamp and the battery 31.

With reference to Figures 1 and 3, the terminals of the integrated circuit 9, generally indicated 11 in Figure 3, are connected to the ends of conductors which are incorporated in the one-piece insulating structure 1 during moulding. The ends of some of the conductors are indicated 12, 13 and 14 in Figure 3. These ends project from the side wall of the hole 8 in the portion 1b of the one-piece structure 1 in respective positions corresponding to those of the terminals of the circuit. In particular, the free ends of the conductors incorporated in the one-piece insulating structure are all bent and extend in the same direction, substantially perpendicular to the portion 1b of the structure, and are welded, for example electrically, to the corresponding pins of the integrated circuit 9.

The other ends of the conductors project from the one-piece insulating structure 1 in various positions as can be seen in Figure 1, in which these other ends are indicated 21a to 21e.

The one-piece supply and control unit according to the invention can easily be assembled and mounted on an alternator near one end of the alternator shaft on which the commutator rings are mounted, as can be seen from Figure 1 in which the shape of the alternator is shown in broken outline and is indicated A.

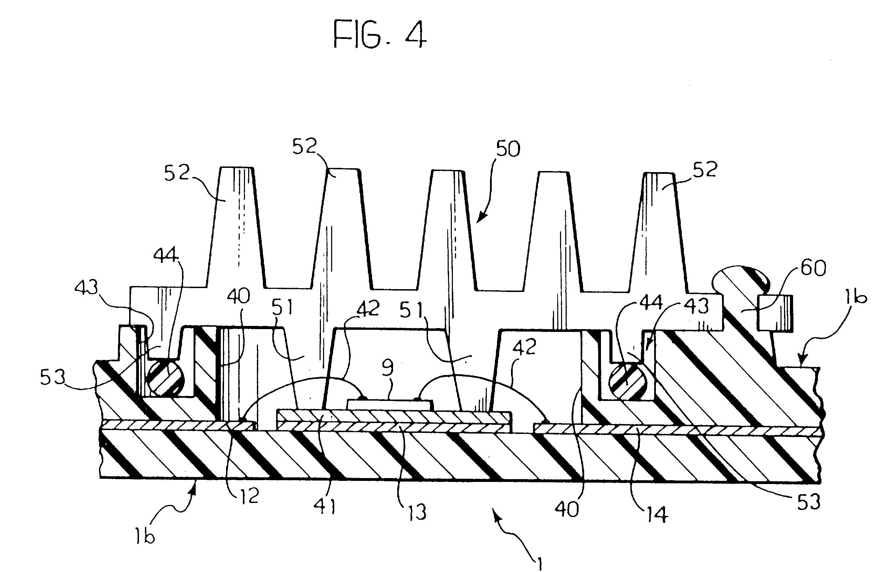

Figure 4 shows a variant of the part of the supply and control unit in which the integrated voltage-regulator circuit is installed.

According to Figure 4, in which the same reference numerals have again been assigned to parts already described, a recess, indicated 40, is formed in the flat portion 1b of the one-piece insulating support structure. The free ends of conductors incorporated in the one-piece insulating structure 1b extend within the base of this recess. These ends are again indicated 12, 13 and 14. The conductor whose end is indicated 13 is intended to be connected to earth and the chip 9 of the integrated voltage-regulator circuit is disposed thereon, with the (optional) interposition of an element 41 of conductive material, for example, copper.

The ends of conductive connecting wires, indicated 42, are soldered to the terminals of the chip 9 and to the free ends 12 and 14 of the conductors incorporated in the one-piece insulating structure.

A groove, indicated 43, in the flat portion 1b of the one-piece structure 1 around the edge of the recess 40 houses a resilient sealing ring 44.

Finally, a closure and heat-dissipation element 50 of thermally-conductive material is associated with the recess 40 and, on its lower surface, has a plurality of integral appendages 51 which extend into the recess so as to be in contact with the dissipator element 41 on which the chip 9 of the voltage-regulator integrated circuit is disposed.

The closure and heat-dissipation element 50 conveniently has a plurality of dissipation fins 52 on its outer surface. The lower surface of the element 50 also has an annular projection 53 adjacent its periphery, extending into the groove 43 in the flat portion 1b of the one-piece insulating structure and sealingly compressing the resilient ring 44.

The region inside the recess 40 is then filled with an insulating material, such as a synthetic resin, which is poured therein through a hole, not shown, in the closure element 50. This element is fixed to the flat portion 1b of the one-piece structure 1, for example, in the manner shown in Figure 4, that is, by the upsetting of the ends of a plurality of projections 60 which are integral with the flat portion 1b and extend through corresponding holes in the periphery of the closure element 50. Alternatively, the closure element 50 may be fixed to the structure 1 by screws or rivets, by gluing, or by other known systems.

Naturally, the principle of the invention remaining the same, the forms of embodiment and details of construction may be varied widely with respect to those described and illustrated purely by way of non-limiting example, without thereby departing from the scope of the present invention as defined in the appended claims.

## Claims

1. A supply and control unit for an alternator (A) for motor vehicles, comprising:
- a brush-holder with a body (1a) of insulating material in which two movable conductive brushes (2) are mounted for cooperating with corresponding rings of the rotor of the alternator (A), and
- a regulator circuit (9) for regulating the voltage generated by the alternator, mounted on an electrically-insulating support (1b) which is intended to be fixed to a stationary part of the alternator (A);
and in which the brush-holder body (1A) and the support (1b) for the voltage-regulator circuit (9) are constituted by a one-piece structure (1), of electrically-insulating material, said regulator circuit (9) having terminals or pins (11) connected to conductors (12-14) fixed to the one-piece insulating structure (1); a closure element (50) of thermally-conductive material being coupled to said support (1b);
characterised in that said regulator circuit is an integrated circuit including a chip (9) and in that a flat portion (1b) of the one-piece support structure (1) has a recess (40) in the base of which the chip (9) of the voltage-regulator circuit is disposed adjacent the free ends (12, 13, 14) of conductors incorporated in the structure (1), the ends of conductive connecting wires (42) being soldered to the terminals of the chip (9) and to the free ends (12, 13, 14) of the conductors; the chip being disposed on the free end (13) of that conductor which is intended to be connected to earth; said closure element (50) being associated with the recess (40) and having at least one appendage (51) which extends into the recess (40) so as to be in contact with a dissipation member (41) in heat-exchange relationship with the chip (9) of the voltage-regulator circuit.

2. A unit according to Claim 1, characterised in that an annular groove (43) around the recess (40) houses a resilient sealing ring (44), and in that the closure element (50) bears on the groove (43) and exerts pressure on the sealing ring (44).

3. A unit according to Claim 1, or Claim 2, wherein said dissipation member (41) is a metal member interposed between the chip (9) and the conductor (13) to be connected to earth.

4. A unit according to any one of Claims 1 to 3, characterised in that the closure element (50) has a plurality of dissipation fins (52) on its outer surface.

5. A unit according to any of the preceding Claims, characterised in that the one-piece insulating structure (1) is moulded from synthetic resin and the conductors (12, 13, 14) are at least partly incorporated in the resin during the moulding.

6. A unit according to Claim 5, characterised in that the one-piece structure (1) includes a first portion (la) housing the conductive brushes (2) and a plate-like second portion (1b) which lies in a plane substantially perpendicular to that of the first portion (1a).

7. A unit according to any of the preceding Claims, wherein the recess (40) is filled with an electrically insulating material.

## Patentansprüche

1. Speise- und Regel-Vorrichtung für einen Wechselstromgenerator (A) für Kraftfahrzeuge, wobei die Vorrichtung enthält:
einen Bürstenhalter mit einem Körper (1a) aus einem Isolierwerkstoff, in dem zwei bewegbare, leitende Bürsten (2) angebracht werden, um mit entsprechenden Ringen des Rotors des Wechselstromgenerators (A) zusammenzuwirken, und
einen Regelschaltkreis (9), um die vom Wechselstromgenerator erzeugte Spannung zu regeln, wobei der Regelschaltkreis auf einer elektrisch isolierenden Halterung (1b) befestigt ist, die dazu dient, um an einem ortsfesten Teil des Wechselstromgenerators (A) befestigt zu werden, und
wobei der Bürstenhalter-Körper (1a) und die Halterung (1b) für den Spannungsregel-Schaltkreis (9) von einem aus einem Stück bestehenden Aufbau (1) aus einem elektrisch isolierenden Werkstoff gebildet werden, wobei der Regelschaltkreis (9) Anschlüsse oder Stifte (11) besitzt, die mit Leitern (12 - 14) verbunden werden, die an dem aus einem Stück bestehenden Isolieraufbau (1) befestigt sind, und wobei ein Verschlusselement (50) aus wärmeleitendem Material mit der Halterung (1b) verbunden wird,
**dadurch gekennzeichnet,**
dass der Regelschaltkreis ein integrierter Schaltkreis mit einem Schaltkreisplättchen (9) ist und dass ein ebener Teil (1b) des aus einem Stück bestehenden Tragaufbaus (1) eine Ausnehmung (40) besitzt, an deren Boden das Schaltkreisplättchen (9) des Spannungsregel-Schaltkreises angrenzend zu den freien Enden (12, 13, 14) von Leitern angeordnet wird, die im Aufbau (1) eingeschlossen sind, wobei die Enden von leitenden Verbindungsdrähten (42) mit den Anschlüssen des Schaltkreisplättchens (9) sowie den freien Enden (12, 13, 14) der Leiter verlötet werden,
dass das Schaltkreisplättchen am freien Ende (13) jenes Leiters angeordnet wird, der dazu vorgesehen ist, um mit Masse verbunden zu werden,
dass der Ausnehmung (40) das Verschlusselement (50) zugeordnet wird, das zumindest einen Vorsprung (51) besitzt, der in die Ausnehmung (40) verläuft, um mit einem Ableitelement (41) in Berührung zu treten, das mit dem Schaltkreisplättchen (9) des Spannungsregel-Schaltkreises in einem Wärmeaustausch steht.

2. Vorrichtung gemäß Anspruch 1, dadurch gekennzeichnet, dass eine ringförmige Rille (43) rund um die Ausnehmung (40) einen elastischen Dichtungsring (44) aufnimmt, und dass das Verschlusselement (50) auf der Rille (43) aufliegt und auf den Dichtungsring (44) einen Druck ausübt.

3. Vorrichtung gemäß Anspruch 1 oder 2, dadurch gekennzeichnet, dass das Ableitelement (41) als Metallelement ausgebildet ist und zwischen dem Schaltkreisplättchen (9) und dem Leiter (13) angeordnet ist, um mit Masse verbunden zu werden.

4. Vorrichtung nach irgendeinem der Ansprüche 1 bis 3, dadurch gekennzeichnet, dass das Verschlusselement (50) an seiner Außenfläche eine Vielzahl von Kühlrippen (52) besitzt.

5. Vorrichtung gemäß irgendeinem der bisherigen Ansprüche, dadurch gekennzeichnet, dass der aus einem Stück bestehende Isolieraufbau (1) aus Kunstharz gegossen wird, wobei die Leiter (12, 13, 14) während des Gießvorgangs zumindest teilweise im Harz eingeschlossen werden.

6. Vorrichtung gemäß Anspruch 5, dadurch gekennzeichnet, dass der aus einem Stück bestehende Aufbau (1) einen ersten Teil (1a), in dem die leitenden Bürsten (2) untergebracht sind, sowie einen plattenförmigen zweiten Teil (1b) aufweist, der in einer Ebene liegt, die im Wesentlichen senkrecht zur Ebene des ersten Teils (1a) verläuft.

7. Vorrichtung gemäß irgendeinem der bisherigen Ansprüche, dadurch gekennzeichnet, dass die Ausnehmung (40) mit einem elektrisch isolierenden Werkstoff ausgefüllt ist.

## Revendications

1. Bloc d'alimentation et de contrôle d'un alternateur (A) pour véhicules automobiles, comprenant:
- un porte-balais avec un corps (la) en matériau isolant, dans lequel deux balais conducteurs mobiles (2) sont montés pour coopérer avec des bagues correspondantes du rotor de l'alternateur (A), et
- un circuit de réglage (9) pour réguler la tension générée par l'alternateur, monté sur un support électriquement isolant (1b) qui est destiné à être fixé à une partie fixe de l'alternateur (A),
et dans lequel le corps du porte-balais (1a) et le support (1b) pour le circuit de réglage de la tension (9) sont constitués d'une structure d'un seul tenant (1) en matériau électriquement isolant, ledit circuit de réglage (9) comprenant des bornes ou des broches (11) connectées à des conducteurs (12-14) fixés à la structure isolante d'un seul tenant (1); un élément de fermeture (50) en matériau thermoconducteur étant couplé audit support (1b);
caractérisé en ce que ledit circuit de réglage est un circuit intégré comprenant une puce (9) et en ce qu'une partie plate (1b) de la structure du support d'un seul tenant (1) a un évidement (40) à la base duquel la puce (9) du circuit de réglage de la tension est placée de manière adjacente par rapport aux extrémités libres (12, 13, 14) des conducteurs incorporés dans la structure (1), les extrémités des câbles de connexion conducteurs (42) étant soudées aux bornes de la puce (9) et aux extrémités libres (12, 13, 14) des conducteurs; la puce étant placée à l'extrémité libre (13) de ce conducteur qui est destiné à être relié à la masse; ledit élément de fermeture (50) étant associé à l'évidement (40) et ayant au moins un appendice (51) qui s'étend dans l'évidement (40) de telle sorte qu'il entre en contact avec un élément de dissipation (41) dans le cadre d'une relation d'échange thermique avec la puce (9) du circuit de réglage de la tension.

2. Bloc selon la revendication 1, caractérisé en ce qu'une rainure annulaire (43) autour de l'évidement (40) abrite une bague d'étanchéité élastique (44) et en ce que l'élément de fermeture (50) porte sur la rainure (43) et exerce une pression sur la bague d'étanchéité (44).

3. Bloc selon la revendication 1 ou 2, dans lequel ledit élément de dissipation (41) est un élément métallique interposé entre la puce (9) et le conducteur (13) devant être relié à la terre.

4. Bloc selon l'une quelconque des revendications 1 à 3, caractérisé en ce que l'élément de fermeture (50) a une pluralité de nervures de dissipation (52) sur sa surface extérieure.

5. Bloc selon l'une quelconque des revendications précédentes, caractérisé en ce que la structure isolante d'un seul tenant (1) est moulée dans de la résine synthétique et les conducteurs (12, 13, 14) sont au moins partiellement incorporés dans la résine durant le moulage.

6. Bloc selon la revendication 5, caractérisé en ce que la structure d'un seul tenant (1) comprend une première partie (1a) abritant les balais conducteurs (2) et une deuxième partie sous forme de plaque (1b) qui se trouve sur un plan sensiblement perpendiculaire à celui de la première partie (1a).

7. Bloc selon l'une quelconque des revendications précédentes, dans lequel l'évidement (40) est rempli avec un matériau électriquement isolant.
